# Europäisches Patentamt

# European Patent Office

# Office européen des brevets

(19)

(11) Numéro de publication: **0 136 209**
**B1**

(12)

# FASCICULE DE BREVET EUROPÉEN

(45) Date de publication du fascicule du brevet:
16.12.87

(51) Int. Cl.⁴: **C 08 G 8/00,** C 08 G 8/10

(21) Numéro de dépôt: **84401619.6**

(22) Date de dépôt: **02.08.84**

(54) Catalyseur de preparation de resines resols.

(30) Priorité: **05.08.83 FR 8312990**

(43) Date de publication de la demande:
**03.04.85 Bulletin 85/14**

(45) Mention de la délivrance du brevet:
**16.12.87 Bulletin 87/51**

(84) Etats contractants désignés:
**DE FR GB IT NL**

(56) Documents cité:
**DE-C-375 638**
**DE-C-595 571**
**US-A-4 293 658**

(73) Titulaire: **ISOVER SAINT- GOBAIN, Les Miroirs 18, avenue d'Alsace, F-92400 Courbevoie (FR)**

(72) Inventeur: **Perrin, Robert, "Le Hameau" Villa 5 87 Chemin de l'Indiennerie, F-69370 St Didier au Mont d'Or (FR)**
Inventeur: **Fugier, Roger, 90 Avenue Pierre Curie, F-60290 Rantigny (FR)**
Inventeur: **Hanton, Daniel, 5 rue Chateaubriand Nogent sur Oise, F-60100 Creil (FR)**
Inventeur: **Lamartine, Roger, 166 avenue Roger Salengro, F-69610 Villeurbanne (FR)**

(74) Mandataire: **Leconte, Jean- Gérard, Saint- Gobain Recherche 39, Quai Lucien Lefranc, F-93304 Aubervilliers Cedex (FR)**

EP 0 136 209 B1

## 0 136 209

**Description**

La présente invention a trait à la fabrication de résines phénoliques et plus particulièrement de résols.

Les résines phénoliques sont obtenues par condensation catalytique d'un composant phénol et d'un composant aldéhyde, et suivant les conditions opératoires mises en jeu, notamment le rapport moléculaire des réactifs de départ, le pH, le catalyseur employé et sa concentration par rapport au phénol, on obtient deux types différents de résines, communément dénommés résols et novolaques.

La préparation des résols s'effectue en général en utilisant un catalyseur alcalin et un excès du composant aldéhyde. La réaction aboutit à la formation d'un réseau tridimensionnel, mais elle peut être figée à un degré de polycondensation donné ou reprendre suivant la température. Ce type de résines renferme en particulier des groupements méthylols ($-CH_2 OH$), des ponts éther-oxy ($-CH_2 - O - CH_2-$) ou des ponts méthylénes ($-CH_2-$). D'une façon générale, la polycondensation s'effectue avec libération d'eau. La formation des résines débute par fixation du composant aldéhyde sur le composant phénol, conduisant à un mélange de phénols alcools réagissant ensuite entre eux pour aboutir à la formation d'un réseau tridimensionnel.

En modifiant d'une part les conditions opératoires, et d'autre part, le degré auquel la polycondensation s'est arrêtée, on obtient des résols auxquels on peut donner des applications variées. Ces résines conviennent notamment pour lier des fibres de verre en vue de l'obtention de produits d'isolation thermique ; dans certaines conditions, elles sont aptes à une transformation en mousses phénoliques ; elles peuvent aussi convenir pour le collage du bois, dans la fabrication de contreplaqué, et de panneaux de bois agglomérés. Elles peuvent être également utilisées pour imprégner une structure fibreuse destinée à servir de produit de renforcement en vue de la fabrication de stratifiés, ou encore intervenir dans la fabrication de produits moulés.

Il est souhaitable que les résines destinées à ces applications contiennent le moins d'eau possible et un des problèmes auquel on se trouve confronte, dans la préparation de résols aptes à être transformés pour une utilisation industrielle, est celui de l'élimination de l'eau présente dans le mélange réactionnel. Il est souvent nécessaire d'éliminer l'eau de la réaction pour obtenir une résine concentrée apte à sa transformation.

A cette fin, on procède usuellement par distillation sous vide, ce qui tend à déplacer la réaction de condensation et donc à modifier de façon indésirable le degré de polycondensation.

On a proposé plusieurs solutions afin de fabriquer des résols desquels la plus grande partie de l'eau soit éliminée.

Il a été notamment proposé d'utiliser un diluant qui permet un meilleur contr*ole de la réaction et permet d'éliminer par voie azéotropique l'eau présente dans les réactifs de départ et celle qui s'est formée pendant la réaction. Mais cette opération génère la plupart du temps des composants liquides et gazeux dont l'élimination est complexe et fort coûteuse.

Il est en outre ressorti que la présence d'eau polluée était essentiellement due à la présence d'eau dans les produits de départ. On a donc également proposé d'employer le formaldéhyde, couramment employé comme aldéhyde, sous forme gazeuse, au lieu de la forme en solution aqueuse usuelle. Mais un tel procédé exige la maîtrise du formol gazeux. En outre, on a voulu le mettre en oeuvre sans catalyseur, ce qui conduit à une perte en sélectivité.

Pour pallier les inconvénients précités, on a été amené à mettre au point des systèmes catalytiques spécifiques qui soient actifs en milieu initialement anhydre. On cherche en effet à réaliser un compromis entre deux types de conditions opératoires : un milieu totalement anhydre beaucoup plus réactif, et donc pouvant se passer de catalyseur, mais qui impose aux monomères de départ des conditions extrêmement sévères, et difficiles à contr*oler et un milieu pratiquement anhydre contenant le moins d'eau possible et dans lequel on utilise des catalyseurs permettant éventuellement de contr*oler et d'orienter la réaction.

Il est connu d'utiliser des amines, et notamment des amines tertiaires, comme système catalytique pour la fabrication de résines du type résols. Le brevet français 1 426 190 cite par exemple des catalyseurs de type amine tertiaire aliphatique, et décrit en particulier uniqueint la triéthylamine, sans mettre en évidence de résultats particuliers.

L'invention propose de fournir une famille de catalyseurs, choisis parmi le groupe extrêmement vaste des amines tertaires, et qui sont particulièrement réactifs pour l'obtention de résols par réaction de condensation en milieu initialement anhydre d'un composant phénol et d'un composant aldéhyde, ces résols étant destinés notamment à être utilisés comme liants pour des produits d'isolation. Selon l'invention, on entend sous le terme "composant phénol", le phénol lui-même, mais également des dérivés du phénol du type phénols substitués. On entend sous le terme "composant aldéhyde" le formaldéhyde sous diverses formes, notamment le paraformaldéhyde ou le trioxane.

Dans cette perspective, l'invention a pour objet un catalyseur de polycondensation en milieu initialement anhydre d'un composant phénol et d'un composant aldéhyde dans un rapport moléculaire formaldéhyde/phénol généralement supérieur à 1, ce catalyseur étant choisi parmi les amines tertaires qui présentent pour une concentration de 0.838 % de molécule azotée par rapport au phénol, une conductivité électrique mesurée dans le phénol ordinaire pur à 60°C, supérieure à $150.10^{-8}$ $\Omega^{-1}$ $m^{-1}$, et qui comportent au moins deux fonctions amines tertiaires, ledit catalyseur étant utilisé à une température supérieure à 50°C, et à une concentration au moins égale à 8 moles de catalyseur pour 10 000 moles du composant phénol.

Il se trouve qu'on n'avait pas, jusqu'à présent, établi de liens entre les propriétés chimiques ou physico-chimiques des catalyseurs de ce type de réaction et leur réactivité dans la fabrication de résols aptes à une transformation industrielle. L'invention, sous un de ses aspects, établit un lien entre la conductivité électrique

2

du système constitué par le catalyseur en solution dans le phénol à une température donnée, et la réactivité de ce catalyseur.

De façon inattendue, l'établissement de cette relation a montré que certaines molécules azotées présentant au moins deux fonctions amines tertiaires et dont la conductivité électrique mesurée dans des conditions identiques dépassait une valeur donnée, présentaient une activité considérablement améliorée par rapport à d'autres composants basiques. L'activité est directement liée au taux du composant phénol transformé après un temps donné la réaction.

Ainsi, l'invention établit notamment que les catalyseurs fournissant les conductivités électriques les plus élevées sont les plus actifs et conduisent aux temps de réaction les plus courts pour un degré de polymérisation donné.

Cette activité est mesurée, en cours de réaction, par la détermination du taux du composant phénol n'ayant pas réagi après un temps donné de réaction, en présence des différents catalyseurs, toutes les autres conditions opératoires demeurant inchangées.

En particulier, le catalyseur utilisé peut être la tétraméthylguanidine (TMG) ou la 4-diméthylamino-pyridine (4-DMAP).

Les catalyseurs selon l'invention s'appliquent en particulier aux réactions de condensation mettant en jeu en tant que composant phénol le phénol ordinaire à l'état liquide, et, en tant que composant aldéhyde, le paraformaldéhyde commercial. Cette application préférée permet d'introduire moins d'eau dans le milieu réactionnel et de mieux utiliser la chaleur de réaction.

Cependant, comme cela apparaîtra dans la description détaillée d'exemples de préparation de résols avec les catalyseurs selon l'invention, ces catalyseurs peuvent également s'appliquer aux réactions mettant en jeu des dérivés du phénol, comme le méthyl-2-phénol (0-crésol) ou d'autres types de phénols substitués. Le composant aldéhyde, outre le formaldéhyde sous forme de paraformaldéhyde, peut être le formaldéhyde en solution non aqueuse ou ou sous forme gazeuse.

L'invention a également pour objet un procédé de préparation de résols aptes à être transformés pour une utilisation industrielle, par polycondensation d'un composant phénol et d'un composant aldéhyde, dans un rapport moléculaire aldéhyde/phénol généralement supérieur à 1 et catalyse basique en milieu non aqueux, le catalyseur employé étant celui objet de l'invention.

Avantageusement, pour mettre en oeuvre le procédé selon l'invention, on se placera à une température inférieure à la température d'ébullition du phénol considéré, et de préférence à une température inférieure à 150°C. Les concentrations efficaces peuvent être aussi faibles que 8 moles pour 10 000 moles de phénol pour une température de 95°C.

Il est également préférable que le catalyseur soit utilisé à une concentration inférieure à celle qui provoquerait l'emballement de la réaction.

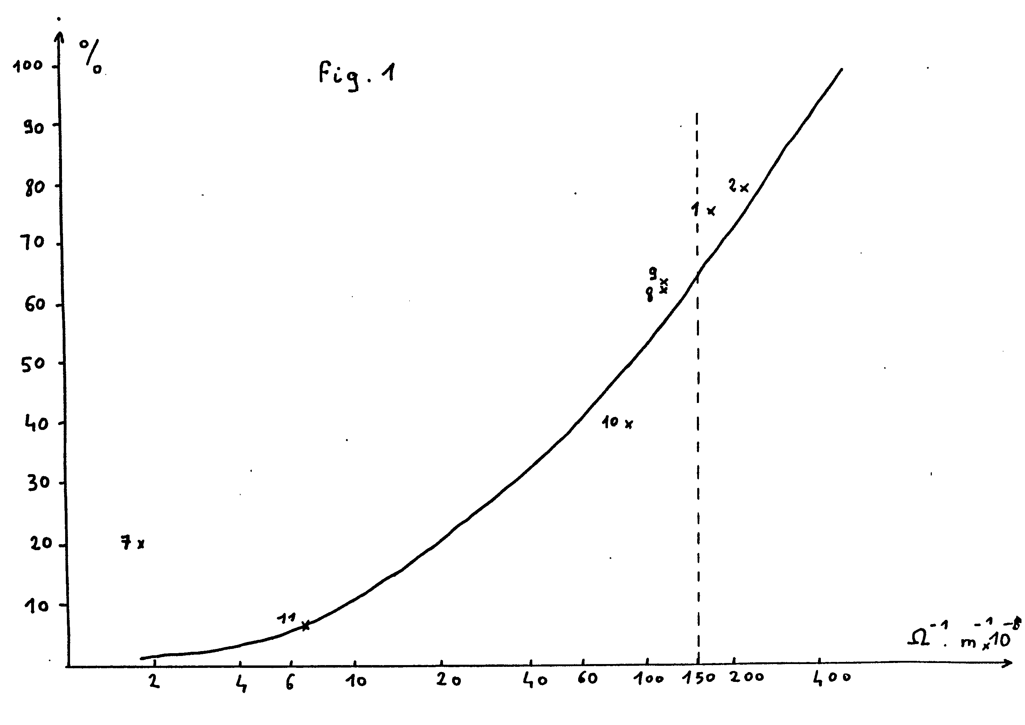

La suite de la description donne des exemples de préparation de résols avec des catalyseurs selon l'invention en relation avec la figure 1 et le tableau 1.

D'autres exemples ont été réalisés à titre d'essais comparatifs de référence : on a comparé l'activité catalytique d'amines tertiaires non objets de l'invention avec celle des amines tertiaires objets de l'invention. De ce fait, les exemples décrits présentent des conditions opératoires communes.

Dans les exemples décrits, la réaction de condensation composant phénol-composant aldéhyde est catalysée en milieu basique à partir des proportions suivantes : 1,4 mole de composant aldéhyde pour 1 mole de composant phénol. La température externe est maintenue à 95°C et des échantillons sont prélevés en cours de réaction et analysés par HPLC. (chromatographie liquide à haute performance).

La concentration de référence en catalyseur est de 0.838 mole pour 100 moles de phénol.

La figure 1 illustre la relation entre l'activité du catalyseur employé et sa conductivité électrique et met en particulier en évidence les propriétés catalytiques de la TMG et de la 4-DMAP.

L'activité correspond au taux de phénol transformé après un temps de réaction donné. Dans les exemples cités, elle est mesurée en fait par le taux de phénol n'ayant pas réagi mais elle apparaît dans la figure 1 sous la forme du taux de phénol transformé, exprimé en pourcentage par rapport au poids de phénol initial (%). La conductivité électrique est celle mesurée pour une concentration de 0.838 mole d'amine pour 100 moles de phénol, dans du phénol ordinaire pur à 60°C, et elle est exprimée en $\Omega^{-1}$ m$^{-1}$ 10$^{-8}$.

La conductivité de la solution de catalyseur dans le phénol est mesurée de la façon indiquée dans le Bulletin de la Société Chimique de France, 1963, p 333, dans l'article de Robert Perrin intitulé "Propriétés cryoscopiques et conductimètriques du phénol et des trois crésols".

L'ensemble de mesure utilisé comprend une cellule de mesure de conductivité constituée par deux palettes en acier inoxydable poli, maintenues par un cylindre de téflon usiné de façon à s'adapter à un rodage mâle normalisé. Lors des mesures, la cellule de conductivité est placée entièrement dans un blindage métallique et reliée par un câble blindé, soit à un mégohmètre électronique TACUSSEL, soit à un conductimètre type CD 6 TACUSSEL.

Les points représentés à la figure 1 correspondent aux produits suivants, en relation avec les exemples ultérieurement décrits.

1 : 4-DMAP
2 : TMG
7 : pyridine
8 : triéthylamine

9 : N,N,N',N' tétraméthyl-butanediamine-1,3 (TMBDA)
10 : N-méthyl-pipéridine
11 : diaza-1,4 bicyclo(2-2-2) octane (DABCO)

Le tableau 1 récapitule, pour différentes amines, leur activité exprimée par la valeur du taux de phénol transformé après 6 min. 30 s de réaction, et déduite de la mesure du taux de phénol restant après ledit temps de réaction, dans la réaction de polycondensation étudiée, ainsi que leur conductivité électrique dans les conditions de concentration qui sont les leurs dans les exemples réalisés.

La TMG et la 4-DMAP apparaissent ainsi particulièrement efficaces.

Les exemples 1 à 6 se réfèrent à des catalyseurs selon l'invention ; les exemples 7 à 11 sont des exemples de référence permettant de mettre en évidence la meilleure activité des catalyseurs selon l'invention par rapport à d'autres amines tertiaires.

**Exemple 1:**

On porte deux moles de phénol à 95°C dans un réacteur en verre de 250 ml, muni d'un agitateur, d'un thermomètre, d'une jaquette dans laquelle circule de l'eau thermostatée à 95°C, d'un robinet de soutirage pour le prélèvement d'échantillons intermédiaires, et d'une garde de $CaCl_2$. On ajoute 2,8 moles de formol sous forme de paraformaldéhyde. Après 20 min. pendant lesquelles le paraformaldéhyde se dépolymérise, on introduit $1{,}676\ 10^{-2}$ mole de N,N-4-diméthylamino-pyridine ou 4-DMAP.

La température du milieu réactionnel s'élève, passe par un maximum de 146.4°C et décroît jusqu'à la température de la jaquette. Le maximum de température est atteint après 6 min. 38 s de réaction, et il correspond à la réactivité maximale.

On obtient un résol visqueux, jaune, limpide et homogène après 90 min de réaction. Après 6 min. 30 de réaction, environ 72,5 du phénol a réagi.

**Exemple 2:**

On procède comme dans l'exemple 1 en remplaçant la 4-DMAP par la N,N,N',N'-tétraméthylguanidine ou TMG.

Le maximum de température de 136.2°C est atteint après 4 min. de réaction. La réaction, très vive dès l'introduction du catalyseur, est arrêtée au bout d'une heure.

On obtient également un résol visqueux jaune, limpide et homogène.

Après 6 min. 30 s de réaction, plus de 77,9 % du phénol a réagi. Dans ce cas, la quantité d'hémiformals présente dans le résol est moindre que dans le cas de la catalyse par la 4-DMAP, ce qui est une qualité intéressante, par exemple pour la fabrication de mousses phénoliques.

**Exemple 3:**

On porte 2 moles de phénol additionnées de $1{,}676\ 10^{-2}$ moles de 4-DMAP à 95°C dans un réacteur de 250 ml muni d'un agitateur, d'un thermomètre, d'un tube plongeur en verre, d'une jaquette dans laquelle circule de l'eau thermostatée à 95°C, d'une sortie de gaz constituée d'un petit tube en verre coudé relié à une garde de $CaCl_2$ par l'intermédiaire d'un tube souple en silicone, d'un robinet de soutirage d'échantillons. On dispose par ailleurs d'un système générateur de formaldéhyde gazeux, qui peut être par exemple un récipient contenant une suspension de paraformaldéhyde dans une huile de silicone portée à 140°C. La jonction entre le générateur et le réacteur est isolée thermiquement.

On introduit le formaldéhyde gazeux dans le phénol. La température interne s'élève en 25 min. jusqu'à 108,5°C où elle se maintient 10 min. et retombe jusqu'à 98,4°C, tandis que le débit de formaldéhyde gazeux diminue jusqu'à une valeur quasi nulle après 1 heure et demie. La jonction avec le générateur est alors coupée. La température de l'eau thermostatée, 95°C, et l'agitation sont maintenues encore 15 min. Puis le résol obtenu est vidangé et refroidi.

Après 6 min. 30 s de réaction, seulement 5 % de phénol a réagi, et 80 % après 1 heure et demie.

Le produit de la réaction est un résol visqueux, jaune, limpide et homogène.

**Exemple 4:**

On procède de la même manière que dans l'exemple 1 en remplaçant le phénol ordinaire par le méthyl-2-phénol ou 0-crésol.

La température s'élève jusqu'à 117,4°C en 17 min. et décroit ensuite. La réaction est arrêtée au bout de 2 heures et 15 min.

On obtient un résol 0-crésolique. L'analyse par HPLC d'un échantillon prélevé après 20 min. de réaction indique un taux de conversion du phénol d'environ 75 %.

Ces conditions conviennent donc très bien pour la synthèse de résols à partir d'alkylphénols. L'HPLC indique la qualité de résol du produit formé.

**Exemple 5:**

On procède comme dans l'exemple 1 en utilisant 1,676 $10^{-3}$ mole de 4-DMAP au lieu de 1,676 $10^{-2}$ mole. Après 2 heures de réaction, environ 40 % du phénol initial a réagi pour former principalement de l'ortho et du paraméthylolphénol, mais on n'obtient pas de résol, ce qui justifie la nécessité d'une concentration minimale du catalyseur.

**Exemple 6:**

On procède comme dans l'exemple 1, mais avec de l'eau circulant à 50°C dans la jaquette. Après 6 min. 30 s de réaction, 5 % seulement de phénol a réagi et après 7 heures de réaction, environ 50 % du phénol a réagi, mais pour former principalement l'ortho et le paraméthylolphénol, ainsi que l'o, p-diméthylolphénol, ce qui justifie la nécessité d'une température minimale de mise en oeuvre du procédé.

Les exemples suivants sont des exemples de référence.

**Exemple 7:**

On procède comme dans l'exemple 1, en remplaçant la 4-DMAP par la pyridine.

Avec le même appareillage que dans l'exemple 1, on porte 2 moles de phénol à 95°C. On ajoute 2,8 moles de formaldéhyde sous forme de paraformaldéhyde. Après 20 min. pendant lesquelles le paraformaldéhyde se dépolymérise, on introduit 1,676.$10^{-2}$ mole de pyridine. La température reste inchangée à 95°C durant les 2 heures 30 min. de réaction. Le milieu obtenu est constitué de deux phases. La phase supérieure, environ 8 % du mélange total, est jaune, limpide et homogène, la phase inférieure jaune pâle, opaque et homogène. Le milieu obtenu est constitué essentiellement de phénol (54 %) ainsi que de formaldéhyde n'ayant pas réagi.

L'analyse d'un prélèvement après 6 min. 30 s de réaction indique seulement 20 % de phénol a réagi. Cet exemple démontre la très faible réactivité de cette base, en relation, comme cela apparaît sur la figure 1, avec sa très faible conductivité électrique.

**Exemple 8:**

On pèse 2 moles de phénol dont on préléve une petite quantité: 6,59.$10^{-2}$ mole de triéthylamine ou TEA, pour former un complexe phénol-TEA en solution dans le phénol. On porte le phénol restant à 95°C dans un réacteur en verre de 250 ml, muni d'un agitateur, d'un thermomètre, d'une jaquette dans laquelle circule de l'huile à la température de 95°C, d'un robinet de soutirage pour le prélèvement d'échantillons intermédiaires et d'une garde de $CaCl_2$. On ajoute 2,8 moles de formaldéhyde sous forme de paraformaldéhyde. Après 20 min., pendant lesquelles le paraformaldéhyde se dépolymérise, on ajoute le mélange phénol-TEA. La température du milieu réactionnel s'élève, passe par un maximum et décroît.

L'analyse du résol obtenu après 90 min. de réaction donne un taux de phénol restant de 12 %. Le résol obtenu est jaune visqueux, limpide et homogène. Un prélèvement au bout de 6 min. 30 s montre que 61,3 % de phénol a réagi.

**Exemple 9:**

Avec le même appareillage que dans l'exemple 1, on porte 2 moles de phénol à 95°C. On ajoute 2,8 moles de formaldéhyde sous forme de paraformaldéhyde. Après 20 min., pendant lesquelles le paraformaldéhyde se dépolymérise, on introduit 1,676.$10^{-2}$ mole de catalyseur la N,N,N',N'-tétraméthylbutanediamine-1,3 ou TMBDA. La température du milieu réactionnel s'élève, passe par un maximum de 140,1°C qui est atteint en 8 min. 15 s, puis diminue. La réaction est arrêtée au bout de 2 heures, le résol obtenu est jaune, limpide, homogène, très visqueux et difficilement soutirable.

L'analyse d'un prélèvement effectué après 6 min. 30 s de réaction indique que 61.5 % de phénol a réagi.

**Exemple 10:**

Avec le même appareillage que dans l'exemple 1, on porte 2 moles de phénol à 95°C. On ajoute 2,8 moles de formaldéhyde sous forme de paraformaldéhyde. Après 20 min. , pendant lesquelles le paraformaldéhyde se dépolymérise, on introduit 1,676.10$^{-2}$ mole de N.méthyl pipéridine. La température du milieu réactionnel s'élève, passe par un maximum de 139,9°C, qui est atteint en 11 min. 30 s, puis diminue. La réaction est arrêtée au bout de 2 heures, le résol obtenu est visqueux, jaune, limpide et homogène.

L'analyse d'un prélèvement après 6 min 30 s de réaction indique que seulement 38,3 % de phénol a réagi.

**Exemple 11:**

Avec le même appareillage que dans l'exemple 1, on porte 2 moles de phénol à 95°C. On ajoute 2,8 moles de formaldéhyde sous forme de paraformaldéhyde. Après 20 min. pendant lesquelles le paraformaldéhyde se dépolymérise, on introduit 1,676.10$^{-2}$ mole de : diaza-1,4 bicyclo (2.2.2) octane ou DABCO. La température du milieu réactionnel s'élève, passe par un maximum de 105,1°C qui est atteint en 35 min., puis diminue. La réaction est arrêtée au bout de 2 heures 30 min., on obtient un résol visqueux, jaune, limpide et homogène.

L'analyse d'un prélèvement après 6 min. 30 s de réaction indique que seulement 7,5 % de phénol a réagi.

**Tableau 1**

| Exemple | Catalyseur azoté | Conductivité de la solution initiale ($\Omega^{-1}$ m$^{-1}$) 10$^{-8}$ à 60°C | taux de phénol restant au bout de (*) 6 min. 30 s | taux de phénol transformé au bout de (*) 6 min. 30 s (en %) |
|---|---|---|---|---|
| 1 | 4 DMAP | 177 | 27,5 | 72,5 |
| 2 | TMG | 220 | 22,1 | 77,9 |
| 7 | Pyridine | 1,8 | 80,0 | 20,0 |
| 8 | TEA | 110 | 38,7 | 61,3 |
| 9 | TMBDA | 110 | 38,5 | 61,5 |
| 10 | N Méthyl pipéridine | 88 | 61,7 | 38,3 |
| 11 | DABCO | 6,7 | 92,5 | 7,5 |

(*) Il s'agit du pourcentage de phénol en poids par rapport au poids de phénol initial.

**Revendications**

1. Catalyseur de polycondensation en milieu initialement anhydre d'un composant phénol et d'un composant aldéhyde dans un rapport moléculaire aldéhyde/phénol généralement supérieur à 1, caractérisé en ce que ce catalyseur est choisi parmi les amines tertiaires qui présentent une conductivité électrique, mesurée dans le phénol ordinaire pur à 60°C et pour une concentration molaire de 0.838 % d'amine par rapport au phénol, qui est supérieure à 150.10$^{-8}$ $\Omega^{-1}$ m$^{-1}$, et qui comportent au moins deux fonctions amine tertiaires, ledit catalyseur étant utilisé à une température supérieure à 50°C, et à une concentration au moins égale à 8 moles de catalyseur pour 10 000 moles du composant phénol.

2. Catalyseur selon la revendication 1, caractérisé en ce qu'il s'agit de la tétraméthylguanidine.

3. Catalyseur selon la revendication 1, caractérisé en ce qu'il s'agit de la 4-diméthylamino-pyridine.

4. Application du catalyseur selon l'une des revendications 1 à 3 à la polycondensation du phénol et du formol, le rapport moléculaire formol/phénol étant supérieur à 1.

5. Application selon la revendication 4, caractérisée en ce que le phénol est sous forme liquide pur et le formol sous forme de paraformaldéhyde.

6. Procédé de préparation de résols aptes à être transformés pour une utilisation industrielle par polycondensation d'un composant phénol et d'un composant aldéhyde dans un rapport moléculaire aldéhyde/ phénol supérieur à 1, et catalyse basique en milieu non aqueux, caractérisé en ce que le catalyseur employé est celui de l'une des revendications 1 à 3.

7. Procédé selon la revendication 6, caractérisé en ce que le catalyseur est employé à une concentration inférieure à celle provoquant l'emballement de la réaction.

8. Procédé selon la revendication 6 ou la revendication 7, caractérisé en ce que la réaction a lieu à une température inférieure à la température d'ébullition du composant phénol, et de préférence inférieure à 150°C.

**Patentansprüche**

1. Katalysator zur Polykondensation einer Phenolverbindung mit einer Aldehydverbindung in einem molekularen Verhältnis Aldehyd/Phenol von im allgemeinen über 1 in anfänglich wasserfreiem Milieu, dadurch gekennzeichnet, daß der Katalysator aus den tertiären Aminen ausgewählt ist, die eine elektrische Leitfähigkeit, gemessen in gewöhnlichem reinen Phenol bei 60°C und bei einer molaren Konzentration von 0,838 % Amin, bezogen auf Phenol, von über 150 x 10$^{-8}$ Ohm$^{-1}$ m$^{-1}$ besitzen, und die wenigstens zwei tertiäre Amingruppen besitzen, wobei der Katalysator bei einer Temperatur oberhalb von 50°C und bei einer Konzentration von wenigstens 8 Mol Katalysator pro 10000 Mol Phenolverbindung verwendet wird.

2. Katalysator nach Anspruch 1, dadurch gekennzeichnet, daß es sich um Tetramethylguanidin handelt.

3. Katalysator nach Anspruch 1, dadurch gekennzeichnet, daß es sich um 4-Dimethylaminopyridin handelt.

4. Verwendung des Katalysators nach einem der Ansprüche 1 bis 3 bei der Polykondensation von Phenol und von Formaldehyd, wobei das molekulare Verhältnis Formaldehyd/Phenol mehr als 1 beträgt.

5. Verwendung nach Anspruch 4, dadurch gekennzeichnet, daß das Phenol in flüssiger reiner Form vorliegt und der Formaldehyd in Form von Paraformaldehyd vorliegt.

6. Verfahren zur Herstellung von Resolen, die zur Umwandlung für eine industrielle Verwendung geeignet sind, durch Polykondensation einer Phenolverbindung und einer Aldehydverbindung in einem molaren Verhältnis Aldehyd/Phenol über 1, und basische Katalyse in nicht wässrigem Milieu, dadurch gekennzeichnet, daß der verwendete Katalysator der nach einem der Ansprüche 1 bis 3 ist.

7. Verfahren nach Anspruch 6, dadurch gekennzeichnet, daß der Katalysator in einer Menge unter derjenigen, die das Durchgehen der Reaktion hervorruft, liegt.

8. Verfahren nach Anspruch 6 oder 7, dadurch gekennzeichnet, daß die Reaktion bei einer Temperatur unterhalb der Siedetemperatur der Phenolverbindung und vorzugsweise unter 150°C stattfindet.

**Claims**

1. Catalyst for the polycondensstion in an initially anhydrous medium of a phenol component and an aldehyde component in an aldehyde/phenol molecular ratio which is generally greater than 1, characterised in that the catalyst is chosen from among the tertiary amines which exhibit an electrical conductivity measured in pure ordinary phenol at 60°C and for a molar concentration of 0.838 % amine in relation to the phenol which is greater than 150.10$^{-8}$ $\Omega^{-1}$ m$^{-1}$, and which comprise at least two tertiary amine groups, the said catalyst being used at s temperature in excess of 50°C and at a concentration which is at least equal to 8 moles catalyst to 10,000 moles phenol component.

2. Catalyst according to Claim 1, characterised in that it is tetramethyl guanidine.

3. Catalyst according to Claim 1, characterised in that it is 4-dimethylamine pyridine.

4. Application of the catalyst according to Claims 1 to 3 to the polycondensation of phenol and formalydehyde, the formaldehyde/phenol molecular ratio being in excess of 1.

5. Application according to Claim 4, characterised in that the phenol is in pure liquid form while the formaldehyde is in the form of paraformaldehyde.

6. Method of preparing resols adapted to be converted to industrial use by polycondensation of a phenol component and an aldehyde component in an aldehyde/phenol molecular ratio in excess of 1, and basic catalysis in a non-aqueous medium, characterised in that the catalyst used is that of one of Claims 1 to 3.

7. Method according to Claim 6, characterised in that the catalyst is used at a concentration below that which causes the reaction to "race".

8. Method according to Claim 6 or Claim 7, characterised in that the reaction takes place at a temperature below the boiling temperature of the phenol component, and preferably at a temperature below 150°C.

Fig. 1